Europäisches Patentamt

European Patent Office

Office européen des brevets

(19)

(11) EP 0 831 346 A1

(12) # DEMANDE DE BREVET EUROPEEN

(43) Date de publication:
**25.03.1998 Bulletin 1998/13**

(51) Int Cl.$^6$: **G02B 6/293**, G02B 6/124

(21) Numéro de dépôt: **97402198.2**

(22) Date de dépôt: **22.09.1997**

(84) Etats contractants désignés:
**AT BE CH DE DK ES FI FR GB GR IE IT LI LU MC NL PT SE**
Etats d'extension désignés:
**AL LT LV RO SI**

(30) Priorité: **24.09.1996 FR 9611601**

(71) Demandeur: **FRANCE TELECOM**
**75015 Paris (FR)**

(72) Inventeurs:
• **Rigny, Arnaud**
  **92220 Bagneux (FR)**
• **Ramus, Catherine**
  **94400 Vitry (FR)**
• **Bruno, Adrien**
  **91120 Palaiseau (FR)**

(74) Mandataire: **Texier, Christian**
**Cabinet Regimbeau,**
**26, Avenue Kléber**
**75116 Paris (FR)**

(54) **Composant multiplexeur à spectographe à réseau de guide d'onde**

(57) Composant optique multiplexeur et/ou démultiplexeur du type à spectrographe à réseau de guides, (3a, 3b ; 13), comportant un coupleur d'entrée (1, 11) et un coupleur de sortie (2, 12) en étoile entre lesquels ledit réseau (3a, 3b ; 13) s'étend, et comportant également des guides optiques respectivement en entrée et en sortie desdits coupleurs d'entrée et de sortie, caractérisé en ce que sa réponse spectrale est la somme de deux réponses spectrales sensiblement gaussiennes dont les pics ($\lambda_1$, $\lambda_1$) sont décalées en longueur d'onde.

## FIG. 1

EP 0 831 346 A1

## Description

La présente invention est relative à un composant multiplexeur et/ou démultiplexeur du type à spectrographe à réseau de guides d'onde (également appelé "phasar" selon la terminologie usuellement employée par l'Homme du Métier).

Les multiplexeurs à spectrographes à réseau de guides d'onde comportent classiquement un réseau dispersif de guides optiques connectés à des guides d'entrée et des guides de sortie par deux coupleurs en étoile. Le champ dans un guide d'entrée est reproduit dans le plan des guides de sortie lorsque la différence de trajet optique entre deux guides adjacent du réseau est égale à un nombre entier de fois la longueur d'onde d'entrée. Une variation de longueur d'onde induit une translation de la distribution du champ sur les guides de sortie. Une telle configuration permet donc de séparer spatialement différentes longueurs d'onde.

De tels composants sont par exemple utilisés comme démultiplexeur 1 vers N, comme multiplexeur N vers 1 ou encore comme multiplexeur N vers N en commutation.

Ils trouvent en particulier avantageusement application dans le domaine des télécommunications sur fibres optiques, par exemple en transmission en haut débit (par exemple dans un circuit de réception) ou dans les réseaux de distribution optiques (séparateur de longueurs d'onde) ou dans des dispositifs d'interconnexion optique ("puces" électroniques rapides à haut degré d'intégration ou entre ordinateurs ou au sein même d'ordinateurs).

Habituellement, la réponse spectrale obtenue dans un guide de sortie d'un tel composant correspond au couplage d'un faisceau gaussien dans un guide gaussien et est donc elle-même gaussienne.

Toutefois, une réponse spectrale gaussienne nécessite un contrôle précis des longueurs d'ondes en émission, ce qui rend difficile son utilisation dans un système. Or, l'existence de petites fluctuations sur les longueurs d'onde d'émission des lasers (fluctuations dues à la température) impose de pouvoir utiliser des canaux présentant des réponses spectrales plus larges (ou un asservissement des lasers, solution plus difficile et coûteuse).

Un élargissement de la réponse spectrale permet aussi une indépendance à la polarisation plus facile à réaliser. En effet, le contrôle de la géométrie des guides pour obtenir une indépendance à la polarisation est très critique (quelle que soit la méthode utilisée). Ainsi, grâce à une réponse spectrale plate, la puissance reçue sur un canal sera indépendante de la polarisation, même si les deux pics TE et TM sont légèrement décalés (décalage lié à un mauvais contrôle de la géométrie).

Plusieurs techniques ont déjà été proposées pour réaliser un spectrographe à réseau de guides d'onde présentant une réponse spectrale de type carrée.

Notamment, il a déjà été proposé notamment dans :

- "Phased-array wavelength demultiplexer with a flattened wavelength response", University of Delft, M.R. Amersfoort et al., IEEE Electronic Letters, February 1995, Vol. 30, No. 4 ;

- "Polarization-independent InP-bases phased-array wavelength demultiplexer with a flattened wavelength response", University of Delft, L.H. Spiekman et al., ECOC 94 d'élargir les guides de sortie de façon à obtenir des guides de sortie largement multimodes. De tels guides multimodes permettent le couplage avec le faisceau incident sur une plus grande plage de longueur d'onde.

Toutefois, ces guides multimodes ne permettent pas de relier la sortie d'un tel spectrographe à réseau de guides à d'autres éléments tels qu'un autre phasar, un amplificateur optique, etc..

Le très mauvais couplage entre un guide multimode et une fibre monomode rend en effet un tel composant inutilisable dans les réseaux de fibres monomodes.

Ces spectrographes ne sont utilisables qu'avec des photodiodes disposées en sortie des guides multimodes, pour détecter une puissance de sortie.

Il a également été proposé, notamment dans - "Arrayed-waveguide grating multiplexer with a flat spectral response", NTT, K. Okamoto and H. Yamada, Optics Letters, January 1995, Vol. 20, No. 1, de réaliser dans le réseau une répartition de la puissance de type "sinus cardinal" en modifiant à la fois la répartition en puissance à l'entrée du réseau de guides et le déphasage des guides du réseau.

Cette structure n'a donné lieu à ce jour à aucune réalisation pratique, et ce pour les raisons suivantes : l'obtention de lobes secondaires de puissance dans le réseau nécessite d'une part de modifier la forme du mode dans le guide d'entrée, celui-ci devant être de forme carrée, et d'autre part d'introduire un déphasage supplémentaire sur les guides qui correspondent aux lobes secondaires.

Comme on le comprendra, cette technique qui joue sur la forme de la puissance d'entrée et le déphasage dans le réseau de guides est difficile à mettre en oeuvre, le mauvais contrôle des paramètres de fabrication dégradant très rapidement les performances du composant.

En particulier, le déphasage correspondant aux lobes secondaires doit être contrôlé avec précision, une erreur de position d'un guide sur le déphasage supplémentaire dégradant très fortement la réponse spectrale et rendant le phasar inutilisable.

Le but de l'invention est d'obtenir un multiplexeur et/ou démultiplexeur à spectrographe à réseau de guides d'onde qui présente une réponse spectrale carrée et qui ne présente pas les inconvénients des techniques précitées.

Il a déjà été proposé par US 5 467 418 un dispositif optique à réseau de guides d'ondes permettant de réduire la valeur du rapport S/WO (espacement des canaux de sortie/largeur de bande passante des coefficients de transmission).

L'invention propose quant à elle un composant optique multiplexeur et/ou démultiplexeur du type à spectrographe à réseau de guides, comportant un coupleur d'entrée et un coupleur de sortie en étoile entre lesquels ledit réseau s'étend, et comportant également des guides optiques respectivement en entrée et en sortie desdits coupleurs d'entrée et de sortie, caractérisé en ce que sa réponse spectrale est la somme de deux réponses spectrales sensiblement gaussiennes dont les pics sont décalées.

En particulier, dans un mode de réalisation avantageux, le composant comporte entre le coupleur d'entrée et le coupleur de sortie au moins deux réseaux de guides de pas différents.

Dans un autre mode de réalisation encore, il comporte des moyens pour réaliser sur au moins deux groupes de guides du réseau des compensations de polarisation différentes, correspondant à deux pics de réponse spectrale décalés.

En variante encore, au moins un guide en entrée du coupleur d'entrée ou en sortie du coupleur de sortie présente une gravure telle que ledit guide, tout en restant monomode, présente une forme de mode à deux pics.

De tels composants présentent des réponses spectrales sensiblement carrées. Ils permettent de s'affranchir des fluctuations des lasers en émission et se prêtent à une intégration avec d'autres composants.

D'autres caractéristiques et avantages de l'invention ressortiront encore de la description qui suit. Cette description est purement illustrative et non limitative. Elle doit être lue en regard des dessins annexés sur lesquels :

- la figure 1 illustre schématiquement un premier mode de réalisation possible pour l'invention ;
- la figure 2 illustre la réponse spectrale obtenue avec le mode de réalisation de la figure 1 ;
- la figure 3 illustre une variante possible pour le mode de réalisation de la figure 1 ;
- la figure 4 illustre un autre mode de réalisation possible pour l'invention ;
- la figure 5 représente schématiquement en vue en coupe d'un guide d'entrée ou de sortie d'un autre mode de réalisation possible pour l'invention ;
- la figure 6 représente schématiquement en vue de dessus le guide de la figure 5 ;
- la figure 7a illustre un mode latéral carré d'une fibre d'entrée ou de sortie obtenu avec le mode de réalisation de la figure 5 ;
- la figure 7b illustre la réponse spectrale obtenue avec le mode de réalisation de la figure 5.

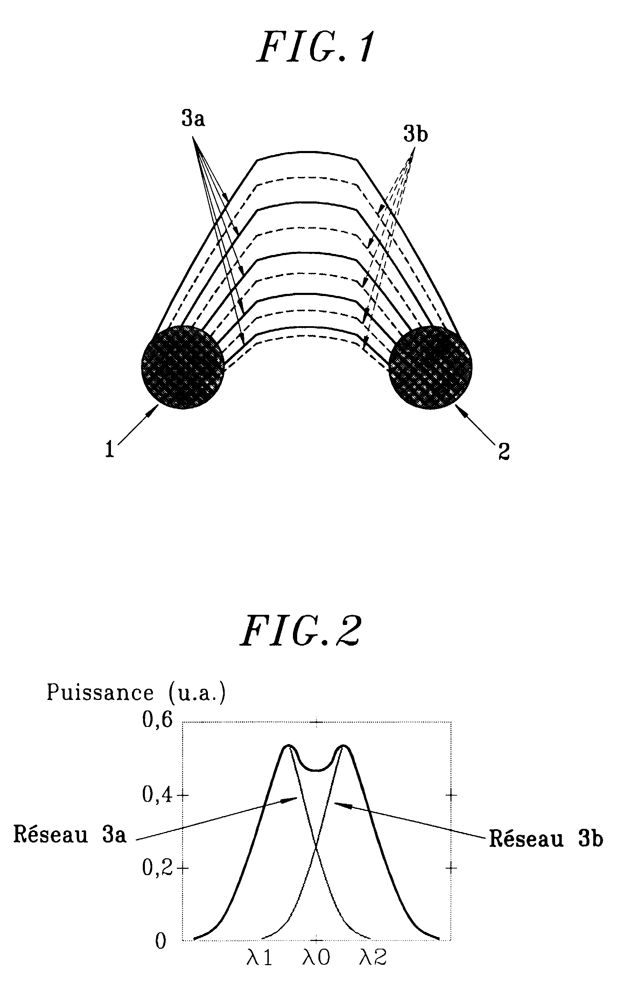

Le dispositif illustré sur la figure 1 comporte un coupleur d'entrée 1 de type en étoile, un coupleur de sortie 2 également de type en étoile, ainsi que deux réseaux de guides 3a et 3b s'étendant entre ces deux coupleurs 1 et 2. Il comporte également des guides d'entrée et de sortie qui n'ont pas été représentés sur cette figure 1.

Dans l'exemple illustré sur cette figure 1, les deux réseaux de guides 3a et 3b sont imbriqués les uns dans les autres, un guide du réseau 3a alternant avec un guide du réseau 3b.

Les deux réseaux 3a et 3b sont choisis de façon que leurs réponses spectrales soient décalées en longueur d'onde, l'écart entre les pics des deux réponses spectrales gaussiennes ainsi générées étant choisi de façon que l'addition des réponses spectrales des deux réseaux 3a et 3b donne une réponse spectrale de type carrée.

En choisissant correctement cet écart entre les deux gaussiennes, on peut ainsi obtenir un élargissement de la réponse spectrale supérieur à trois fois la largeur spectrale de la réponse gaussienne d'un réseau.

On sait en effet qu'un réseau est caractérisé par la différence de longueur entre deux guides adjacents qui le composent.

Soit $\Delta L_1$ la différence de longueur entre deux guides adjacents du premier réseau, $\Delta L_1$ la différence de longueur entre deux guides adjacents du second réseau.

Les longueurs d'ondes $\lambda_1$ et $\lambda_2$ pour lesquelles le faisceau incident se couple dans le guide central de sortie sont données sur le tableau suivant.

| | Réseau 1 | Réseau 2 |
|---|---|---|
| Différence de longueur entre deux guides adjacents | $\Delta L_1 = \Delta L - \frac{\delta 1}{2}$ | $\Delta L_2 = \Delta L - \frac{\delta 1}{2}$ |

(suite)

|  | Réseau 1 | Réseau 2 |
|---|---|---|
| Longueur d'onde pour laquelle le faisceau incident se couple dans le guide central de sortie | $\lambda_1 =$ $$\frac{n_{C1}(\Delta L - \frac{\delta 1}{2})}{m} = \lambda_0 - \frac{n_{C1}\delta 1}{2m}$$ | $\lambda_1 =$ $$\frac{n_{C2}(\Delta L - \frac{\delta 1}{2})}{m} = \lambda_0 - \frac{n_{C2}\delta 1}{2m}$$ |

où nc1 est l'indice effectif des guides du réseau 1, nc2 celui du réseau 2, m l'ordre d'interférence commun des deux réseaux, $\Delta L$ étant la moyenne entre $\Delta L_1$ et $\Delta L_2$, $\delta 1$ étant la différence entre $\Delta L_1$ et $\Delta L_2$.

Par exemple, si les guides des deux réseaux sont identiques, la réponse spectrale résultante est centrée sur :

$$\lambda_0 = \frac{n_c \Delta 1}{m}$$

et est formée de deux pics dont l'écart en longueur d'onde est :

$$\delta\lambda = \frac{n_c \delta 1}{m}$$

Une réponse spectrale ainsi obtenue a été illustrée sur la figure 2, sur laquelle on a également représenté en traits pointillés les deux réponses spectrales gaussiennes dont la réponse spectrale représentée en traits pleins sur cette figure 2 est la résultante.

Bien entendu d'autres configurations que la configuration à réseaux imbriqués illustrée sur la figure 1 sont envisageables. Notamment, les deux réseaux pourraient s'étendre entre les deux coupleurs 1 et 2 en étant situés dans deux zones différentes.

Egalement, toutes les géométries peuvent être envisagées pour les réseaux 3a et 3b.

Par ailleurs, les deux réseaux 3a et 3b sont avantageusement réalisés de façon à être séparément indépendants de la polarisation.

On utilise à cet effet les techniques classiquement connues de l'Homme du Métier (guides non biréfringents, utilisation d'une lame demi-onde, utilisation d'un convertisseur de polarisation intégré, compensation de la biréfringence dans la nappe, etc...).

A titre d'exemple, on peut utiliser les techniques de compensation de biréfringence telles que décrites notamment dans les brevets FR 95 03945, FR 95 04031, dont l'enseignement est ici inclus par référence, en les appliquant indépendamment à chaque réseau.

Selon l'une de ces techniques, des rotateurs de polarisation sont disposés sur le trajet de la lumière de chacun des guides optiques pour rendre égaux les chemins optiques parcourus respectivement par les modes de polarisation TE et TM.

Selon une autre de ces techniques, les guides optiques d'un réseau sont chacun constitués d'au moins deux portions correspondant à deux types biréfringences différentes. L'une des portions présente une biréfringence de type normale, l'autre constituant une portion de compensation.

Le pas $\Delta L$ du réseau de guides optiques et la différence $\Delta l$ de longueur de la portion de compensation entre deux guides adjacents sont choisies de façon à obtenir une compensation globale nulle.

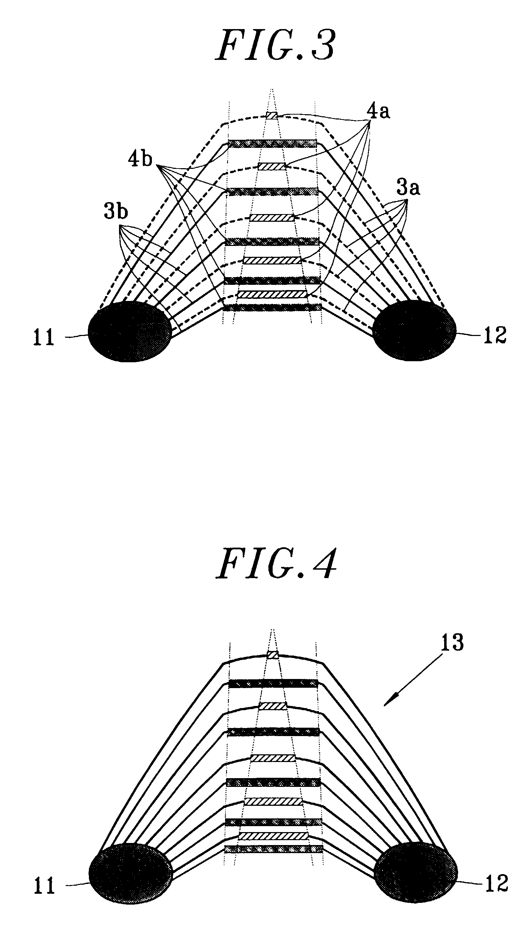

Sur la variante illustrée sur la figure 3, une compensation de ce type est appliquée indépendamment au réseau 3a et au réseau 3b. Les portions de compensation du réseau 3a ont été référencées par 4a, celles du réseau 3b par 4b.

On se réfère maintenant à la figure 4 sur laquelle a été illustré un autre mode de réalisation possible pour l'invention.

Dans ce mode de réalisation, on applique à deux sous-ensembles de guides d'un même réseau 13 entre deux coupleurs en étoile 11 et 12, deux compensations différentes, de façon à générer deux pics qui en se combinant définissent pour ledit réseau 13 une réponse spectrale carrée.

Par exemple, les portions de compensation et les portions normales sont d'un même type d'un guide à l'autre, les longueurs des portions de compensation de deux guides adjacents étant telles que deux guides adjacents correspondent à deux compensations différentes.

$\Delta L$ étant la différence de longueur entre deux guides adjacents, $\Delta l1$ et $\Delta l2$ les différences de longueurs entre portions de compensation de l'une et l'autre des deux compensations, les longueurs d'onde $\lambda 1$ et $\lambda 2$ correspondant

aux pics ainsi générés pour les modes TE et TM sont donnés par

| | TE | | TM | |
|---|---|---|---|---|
| | sous-réseau 1 | sous-réseau 2 | sous-réseau 1 | sous-réseau 2 |
| Différence de longueur | $\Delta l1$ | $\Delta l2$ | $\Delta l1$ | $\Delta l2$ |
| Position des pics | $\lambda_1 = \dfrac{n_{1TE}\Delta L}{m} + \dfrac{(n_{2TE}-n_{1TE})\Delta l1}{m}$ | $\lambda_2 = \dfrac{n_{1TE}\Delta L}{m} + \dfrac{(n_{2TE}-n_{1TE})\Delta l2}{m}$ | $\lambda_1 = \dfrac{n_{1TM}\Delta L}{m} + \dfrac{(n_{2TM}-n_{1TM})\Delta l1}{m}$ | $\lambda_2 = \dfrac{n_{1TM}\Delta L}{m} + \dfrac{(n_{2TM}-n_{1TM})\Delta l2}{m}$ |

où n1TE et n2TE , n1TM et n2TM sont les indices effectifs des portions normales et des portions de compensation respectivement pour les modes TE et TM.

Δl1 et Δl2 sont choisis pour que les longueurs d'onde λ1 et λ2 soient les mêmes pour le mode TE et pour le mode TM. La réponse spectrale est alors similaire à celle illustrée sur la figure 2.

Dans le mode de réalisation de la figure 1 et pour celui de la figure 3, les guides du réseau présentent par exemple la structure épitaxiée suivante

| Matériau | Epaisseur |
|----------|-----------|
| InP | 0.6 μm |
| Q (1.3 μm) | 0.3 μm |
| InP | 0.55 μm |
| Q (1.3 μm) | 0.05 μm |
| InP | 0.55 μm |
| Q (1.3 μm) | 0.05 μm |
| InP | 0. 55 μm |
| Q (1.3 μm) | 0.05 μm |
| InP | substrat |

où Q est un matériau quaternaire tel qu'un matériau InGaASP.

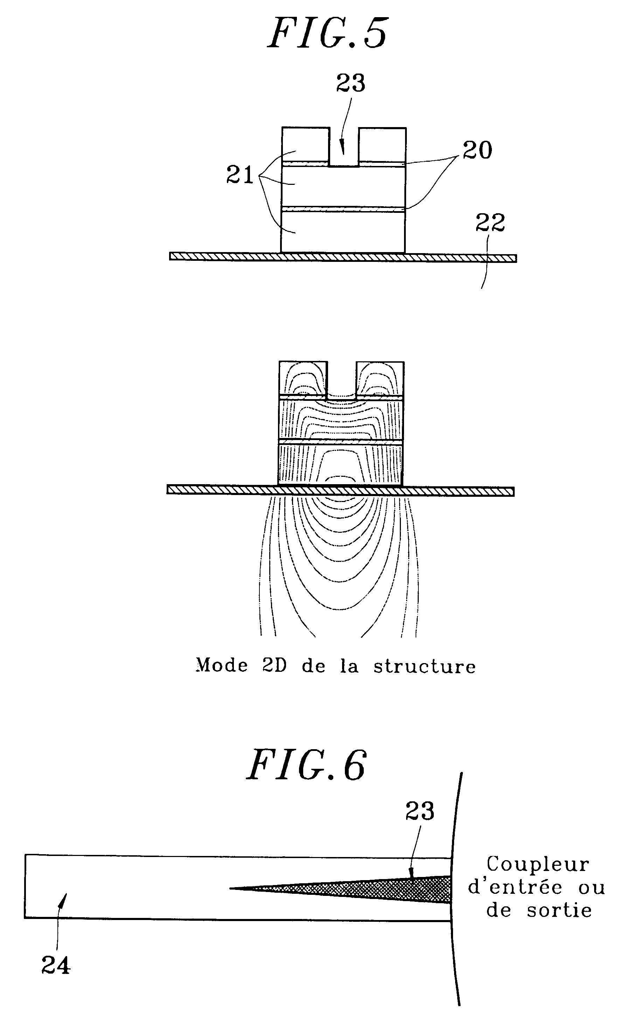

Une autre variante est encore illustrée sur la figure 5.

Dans ce mode de réalisation, la partie guidante du (ou des) guide(s) d'onde en entrée du coupleur d'entrée ou du (ou des) guide(s) d'onde en sortie du coupleur de sortie est (ou sont) gravé(s) de façon, tout en restant monomode, à correspondre à une forme de mode présentant deux pics (assimilés à des formes gaussiennes).

La structure guidante illutrée sur la figure 5 comporte deux couches - référencées par 20 - absorbantes à la longueur d'onde de 1,3 μm (par exemple des couches d'InGaAsP de 0,05 μm d'épaisseur) disposées entre une couche d'InP inférieure, une couche d'InP supérieure et une couche d'InP intermédiaire, ces trois couches - référencées par 21 sur la figure 5 - étant des couches de 0,55 μm d'épaisseur déposées sur un substrat 22.

La gravure - référencée par 23 - est réalisée sur la couche d'InP supérieure 21 et la couche guidante 20 adjacente.

Bien entendu, et ainsi qu'illustré sur la figure 6, cette gravure 23 n'est pas ménagée sur toute la longueur du guide d'entrée ou de sortie 24, mais uniquement dans une zone de transition au voisinage immédiat du coupleur correspondant.

La largeur du ruban défini par les couches guidantes est par exemple de 5 μm, la largeur de la gravure au voisinage immédiat du coupleur correspondant étant de 1 μm.

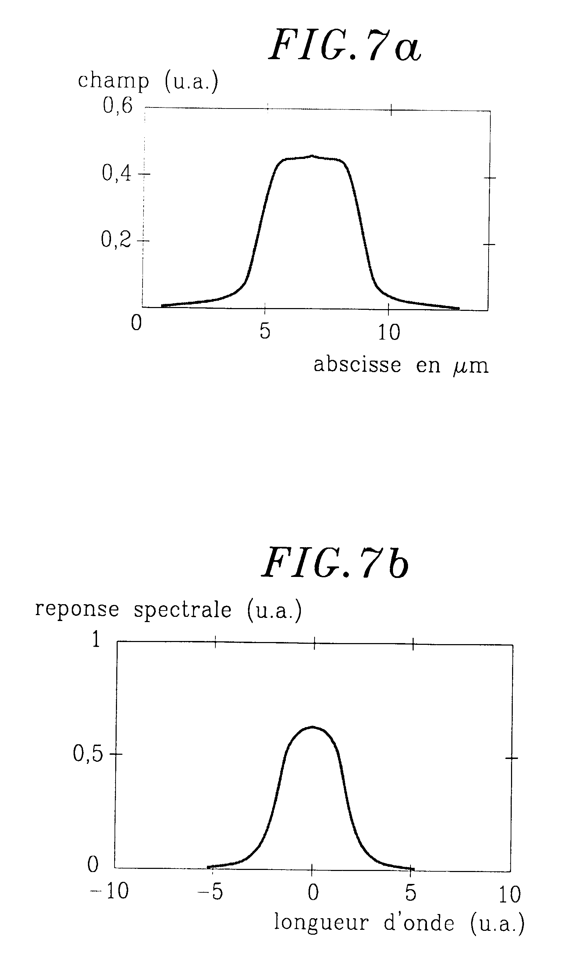

Cette structure permet d'obtenir un mode latéral carré, du type de celui illustré sur la figure 7a.

La réponse spectrale alors obtenue, qui est la convolution entre ce mode carré et un mode gaussien plus étroit (même guide tricouche, mais de 3 μm de largeur), est alors carrée, ainsi qu'illustré sur la figure 7b.

On rappelle en effet que la réponse spectrale est la convolution entre le mode du guide d'entrée et le mode du guide de sortie, les rôles des guides d'entrée et de sortie étant interchangeables.

On a illustré sur la figure 7b la réponse spectrale obtenue avec un guide de largeur de mode (à 1/e) de 1,6 μm.

Dans ce mode de réalisation, la compensation de polarisation est mise en oeuvre de la même façon que pour les variantes de réalisation des figures précédentes.

**Revendications**

1. Composant optique multiplexeur et/ou démultiplexeur du type à spectrographe à réseau de guides, (3a, 3b ; 13), comportant un coupleur d'entrée (1, 11) et un coupleur de sortie (2, 12) en étoile entre lesquels ledit réseau (3a, 3b ; 13) s'étend, et comportant également des guides optiques respectivement en entrée et en sortie desdits coupleurs d'entrée et de sortie, caractérisé en ce que sa réponse spectrale est la somme de deux réponses spectrales sensiblement gaussiennes dont les pics ($\lambda_1$, $\lambda_2$) sont décalés en longueur d'onde.

2. Composant selon la revendication 1, caractérisé en ce qu'il comporte entre le coupleur d'entrée (1) et le coupleur de sortie (2) au moins deux réseaux de guides (3a, 3b) de pas différents.

3. Composant selon la revendication 2, caractérisé en ce que les fibres des réseaux (3a, 3b) sont intercalées les unes par rapport aux autres dans la largeur des réseaux.

4. Composant selon la revendication 1, caractérisé en ce qu'il comporte des moyens pour réaliser sur au moins deux groupes de fibres du réseau (13) des compensations de polarisation différentes, correspondant à deux pics ($\lambda_1$, $\lambda_2$) de réponse spectrale décalés en longueur d'onde.

5. Composant selon l'une des revendications précédentes, caractérisé en ce que les moyens de compensation comportent sur les guides du (ou des) réseau(x) des portions de compensation (4a, 4b) dont la biréfringence et la longueur sont telles que la biréfringence globale des guides est sensiblement nulle.

6. Composant selon les revendications 4 et 5 prises en combinaison, caractérisé en ce que les différences de longueur de la portion de compensation entre deux fibres successives de l'un et l'autre des deux groupes de guides du réseau sont telles que :

$$n_{1TE}\Delta L + (n_{2TE}\text{-}n_{1TE})\Delta l1 = n_{1TM}\Delta L + (n_{2TM}\text{-}n_{1TM})\Delta l1$$

$$n_{1TE}\Delta L + (n_{2TE}\text{-}n_{1TE})\Delta l2 = n_{1TM}\Delta L + (n_{2TM}\text{-}n_{1TM})\Delta l2$$

où $n_{1TE}$ et $n_{2TE}$, $n_{1TM}$ et $n_{2TM}$ sont les indices effectifs des portions normales et des portions de compensation respectivement pour les modes TE et TM,

$\Delta 1$ étant la différence de longueur entre deux guides adjacents, $\Delta l1$ et $\Delta l2$ les différences de longueurs entre portions de compensation de l'une et l'autre des deux compensations.

7. Composant selon la revendication 1, caractérisé en ce qu'au moins un guide en entrée du coupleur d'entrée ou en sortie du coupleur de sortie présente une gravure (23) telle que ledit guide (24), tout en restant monomode, présente une forme de mode à deux pics.

# FIG.1

# FIG.2

## *FIG.3*

## *FIG.4*

# FIG.5

Mode 2D de la structure

# FIG.6

Coupleur
d'entrée ou
de sortie

# FIG.7a

champ (u.a.)

abscisse en $\mu$m

# FIG.7b

reponse spectrale (u.a.)

longueur d'onde (u.a.)

Office européen
des brevets

**RAPPORT DE RECHERCHE EUROPEENNE**

Numéro de la demande

EP 97 40 2198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X,D | US 5 467 418 A (DRAGONE CORRADO) 14 novembre 1995<br>* le document en entier * | 1,2 | G02B6/293<br>G02B6/124 |
| A | WO 95 22070 A (PHILIPS ELECTRONICS NV ;PHILIPS NORDEN AB (SE)) 17 août 1995<br>* figures 1,4,6,9 *<br>* page 1, ligne 1 - ligne 29 *<br>* page 15, ligne 29 - ligne 34 *<br>* page 16, ligne 1 - ligne 15 * | 1,2,7 | |
| A | US 5 341 444 A (HENRY CHARLES H ET AL) 23 août 1994<br>* le document en entier * | 1,4,5,7 | |
| A | LIERSTUEN L O ET AL: "8-CHANNEL WAVELENGTH DIVISION MULTIPLEXER BASED ON MULTIMODE INTERFERENCE COUPLERS"<br>IEEE PHOTONICS TECHNOLOGY LETTERS, vol. 7, no. 9, 1 septembre 1995, pages 1034-1036, XP000527511<br>* le document en entier * | 1,2 | |
| A | HIROSHI TAKAHASHI ET AL: "POLARIZATION-INSENSITIVE ARRAYED-WAVEGUIDE WAVELENGTH MULTIPLEXER WITH BIREFRINGENCE COMPENSATING FILM"<br>IEEE PHOTONICS TECHNOLOGY LETTERS, vol. 5, no. 6, 1 juin 1993, pages 707-709, XP000384062<br>* le document en entier * | 1,4,5 | **DOMAINES TECHNIQUES RECHERCHES (Int.Cl.6)**<br>G02B |

Le présent rapport a été établi pour toutes les revendications

| Lieu de la recherche | Date d'achevement de la recherche | Examinateur |
|---|---|---|
| LA HAYE | 18 décembre 1997 | Mathyssek, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)